# EUROPÄISCHE PATENTSCHRIFT

(11) **EP 0 713 097 B1**
(45) Veröffentlichungstag und Bekanntmachung des Hinweises auf die Patenterteilung: **14.05.2003**
(21) Anmeldenummer: 95116917.6
(22) Anmeldetag: 27.10.1995
(51) Int. Cl.: G01P 1/14, G07C 5/12

(54) **Fahrtschreiber mit einem im Schreibsystem für die Geschwindigkeitsaufzeichnungen vorgesehenen Schrittmotor**
Tachograph incorporating a stepping motor in the recording system for speed registration
Tachygraphe avec moteur pas-à-pas dans le système d'enregistrement de la vitesse

(30) Priorität: 17.11.1994 DE 4440949
(43) Veröffentlichungstag der Anmeldung: 22.05.1996
(73) Patentinhaber: SIEMENS AKTIENGESELLSCHAFT, 80333 München (DE)
(72) Erfinder: Kirner, Herbert, Dipl.-Ing. (FH), D-78052 Villingen-Schwenningen (DE)

(56) Entgegenhaltungen:
- EP-A- 0 339 225
- DE-A- 3 244 436
- US-A- 3 132 916
- US-A- 3 141 726

## Beschreibung

Die Erfindung betrifft einen Fahrtschreiber mit einem im Schreibsystem für die Geschwindigkeitsaufzeichnungen vorgesehenen Schrittmotor, mit einem Anschlag, mit welchem der Träger des Geschwindigkeitsschreibstiftes in nicht zwingend gleichen Zeitabständen durch Beaufschlagen des Schrittmotors mittels einer meßwertunabhängigen Impulsserie in Wirkverbindung gebracht wird, um bleibende Abweichungen der tatsächlichen Position des Geschwindigkeitsschreibstiftes von der Sollposition des Schrittmotors zu vermeiden und mit Vorkehrungen zur Verbesserung der Lagegenauigkeit des Geschwindigkeitsschreibstiftes in bezug auf eine für die Geschwindigkeitsaufzeichnungen auf einer in dem Fahrtschreiber als Aufzeichnungsträger verwendeten Diagrammscheibe festgelegte Grundlinie.

Die Aufzeichnungen von Fahrtschreibern, das heißt die Aufzeichnungen wenigstens der von einem Kraftfahrzeug gefahrenen Geschwindigkeiten, der zurückgelegten Strecken und der verschiedenen Arbeitszeiten sowie der Pausen eines Fahrers dienen bekanntlich der Beurteilung der wirtschaftlichen Nutzung eines Fahrzeuges vor allem aber der Unfallauswertung und bei Verkehrskontrollen dem Nachweis der Einhaltung von Verkehrsvorschriften.

Insofern muß insbesondere für die Geschwindigkeitsaufzeichnungen ein hohes Maß an Übereinstimmung mit den auf einer Diagrammscheibe aufgedruckten Kreislinien der Geschwindigkeitsskale bestehen. Aufgrund vielfältiger Fertigungsund Montagetoleranzen insbesondere bei solchen Fahrtschreibern, bei denen die Diagrammscheiben einer relativ zum Gerätegehäuse bewegbaren Auflage zugeordnet und die Träger der Schreibstifte in dem Gehäuse verschiebbar gelagert sind, ist eine solche Übereinstimmung nach der Montage eines Fahrtschreibers nicht ohne weiteres gegeben. Das heißt, es ist vorbehaltlich einer Einstellung der Steilheit der Kennlinie des Geschwindigkeitsmeßsystems erforderlich den Geschwindigkeitsschreibstift exakt auf einen Geschwindigkeitsskalenkreis vorzugsweise jedoch auf die Grundlinie der Geschwindigkeitsaufzeichnungen zu positionieren, was im allgemeinen einen erheblichen Justieraufwand erfordert.

Das bisher übliche Justierverfahren, das ein Herantasten an die Sollage des Geschwindigkeitsschreibstiftes aufgrund einer Testaufzeichnung darstellt, sieht vor, entweder das Geschwindigkeitsmeßwerk in einer geeigneten Langlochbefestigung zu verdrehen oder den Halter des Geschwindigkeitsschreibstiftes zu verbiegen. Dabei ist in der Regel mehrmals ein Testlauf und ein öffnen und Schließen des Fahrtschreibers vorzunehmen. Ein solches Justierverfahren das eine Vielzahl von Handgriffen erfordert und dessen Ergebnis von der subjektiven Geschicklichkeit und Sorgfalt des Justierenden abhängt ist zeitraubend, zeitlich nicht planbar und kann demnach nicht unmittelbar in den Fertigungsfluß einer Großserienfertigung eingegliedert werden.

Der Erfindung lag somit die Aufgabe zugrunde, den im Zusammenhang mit der Positionierung des Geschwindigkeitsschreibstiftes geschilderter Justieraufwand zu vermeiden insbesondere jedoch den Justiervorgang zu mechanisieren und dadurch auch reproduzierbar zu machen.

Die Lösung der Aufgabe beschreibt der Patentanspruch 1, vorteilhafte Ausgestaltungen die Ansprüche 2, 3.

Mit der gefundenen Lösung die sozusagen einen elektronischen Toleranzausgleich einer mechanischen Baugruppe darstellt ist der Justiervorgang zur Positionierung des Geschwindigkeitsschreibstiftes automatisierbar und somit zeitlich planbar. Damit lassen sich die Kosten für die Herstellung des Fahrtschreibers wesentlich verringern. Gleichzeitig läßt sich aber auch eine relativ hohe Genauigkeit der Justierung erzielen, so daß großseriengerechte Fertigungstoleranzen für die zusammenwirkenden Bauteile in Anwendung kommen können.

Von Bedeutung ist ferner, daß der in dem betreffenden Fahrtschreiber in Form einer genau definierten Impulszahl gespeicherte Korrekturwert während der gesamten Einsatzzeit des Fahrtschreibers sozusagen als Dokumentation der vorgenommenen Justierung zur Verfügung steht.

Außerdem läßt sich die Erfindung auf einfache Weise dazu nutzen, eine ein Öffnen und Schließen des Fahrtschreibers oder ein Einlegen einer Diagrammscheibe kennzeichnende Markierung aufzuzeichnen, indem der Träger des Geschwindigkeitsschreibstiftes gegen den Anschlag geführt, der Geschwindigkeitsschreibstift falls erforderlich auf die Diagrammscheibe abgesenkt und zur Rückführung des Geschwindigkeitsschreibstiftes in die Position der Grundlinie der Geschwindigkeitsaufzeichnungen der Schrittmotor mit einer dem Korrekturwert entsprechenden Impulszahl angesteuert wird.

Ein zusätzlicher Vorteil der Erfindung bietet sich auch im Hinblick auf die unterschiedlichen Meßbereiche, für die Fahrtschreiber ausgelegt sein müssen, wobei für gewisse Meßbereiche aus Gründen der Auflösbarkeit der Geschwindigkeitsaufzeichnungen unterschiedliche radiale Lagen der Grundlinien der Geschwindigkeitsaufzeichnungen festgelegt sind. Das heißt, die Erfindung ermöglicht ohne daß bei der Montage mechanische Veränderungen oder ein Austausch von Bauteilen vorgenommen werden müssen eine Justierung sämtlicher Geräte, wenn diese bezüglich der Lage des Anschlages dem Gerät mit dem größten Meßbereich entsprechen.

Im folgenden sei die Erfindung anhand der beigefügten Zeichnungen näher erläutert. Es zeigen:
- Fig. 1: eine Draufsicht eines Schreibsystems eines Fahrtschreibers im Zustand des Aufzeichnens eines Geschwindigkeitswertes,
- Fig. 2: eine schematische Darstellung der Justiersituation,
- Fig. 3: einen Diagrammscheibenausschnitt mit mehreren Geschwindigkeitsdiagrammen.

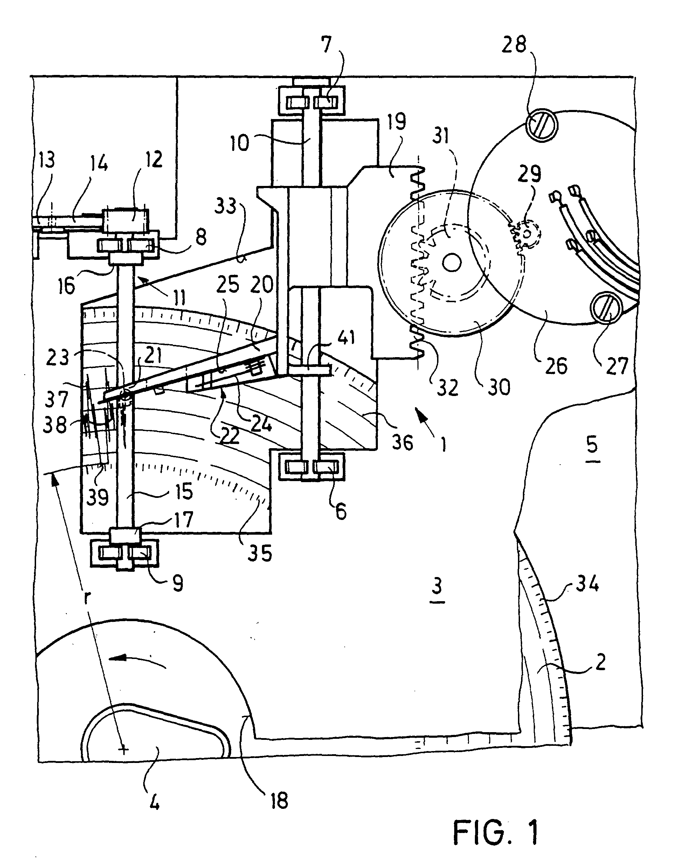

Die in Fig. 1 dargestellte Bauform eines Schreibsystems 1 findet vorzugsweise in Fahrtschreibern Anwendung, bei denen die Diagrammscheibe 2 entweder selbsttätig eingezogen und ausgegeben werden kann oder einer Schublade bzw. einem Träger, welche parallel zu einer das Schreibsystem 1 tragenden Montageplatte 3 verschoben bzw. verschwenkt werden können, zugeordnet ist. Die Erfindung ist aber auch bei Fahrtschreibern realisierbar, bei denen das Uhrwerk und der den Diagrammscheiben zugeordnete Zentrier- und Mitnahmedorn in einem aufklappbaren Deckel angeordnet sind, was bekanntlich den Vorteil bietet, daß im Gegensatz zu den erstgenannten Fahrtschreibertypen ein Anheben und Absenken der Schreibstifte bzw. der Diagrammscheibenauflage, wenn letztere sich beim Wechseln einer Diagrammscheibe noch oder wieder in Schreibposition befindet, nicht erforderlich ist.

In Fig. 1 ist mit 4 ein Zentrier- und Mitnahmedorn bezeichnet, dessen nicht dargestellter uhrzeitsynchroner Antrieb beispielsweise im Boden 5 einer Schublade angeordnet ist. Mit 6, 7, 8 und 9 sind an der Montageplatte 3 vorzugsweise spritzgußtechnisch angeformte Halter bezeichnet, von denen das eine Halterpaar 6, 7 der Befestigung einer Führungsstange 10 dient, während in dem anderen Halterpaar 8, 9 eine Exzenterwelle 11 gelagert ist. Letztere ist von einem nicht dargestellten Stellmotor über Zahnräder 12, 13 und 14 antreibbar und besteht bei dem dargestellten Ausführungsbeispiel aus einer zylindrischen Stange 15, welche in Mitnehmern 16 und 17, die in den Haltern 8 und 9 gelagert sind, exzentrisch aufgenommen ist. Dabei ist dem Mitnehmer 16 das Zahnrad 14 zugeordnet. Eine in der Montageplatte 3 vorgesehene Aussparung 18 dient, was später näher erläutert wird, der Beobachtung des Zentrier- und Mitnahmedorns 4. Ferner geht aus der Fig. 1 hervor, daß auf der Führungsstange 10 ein Träger 19 verschiebbar gelagert ist. An dem Träger 19 ist ein Arm 20 ausgebildet, der mit einem Finger 21 in den Bewegungsbereich der Exzenterwelle 11 eingreift. Ferner ist an dem Arm 20 eine die Registrierkraft liefernde Schenkelfeder 22 gehaltert sowie ein Schreibstift 23 befestigt und zwar an einem in Fig. 1 nicht sichtbaren, die Stange 15 der Exzenterwelle 11 untergreifenden Schenkel des Armes 20. Der Vollständigkeit halber sei in diesem Zusammenhang noch erwähnt, daß der eine Schenkel 24 der Schenkelfeder 22 sich stets an dem Arm 20 abstützt während der andere Schenkel 25 an der exzentrisch gehalterten Stange 15 anliegt und beim Verschwenken der Exzenterwelle 11 im Sinne eines Absenkens des Schreibstiftes 23 auf die Diagrammscheibe 2 als federnder Mitnehmer dient. Im Gegensatz hierzu hat der Finger 21 die Aufgabe nach einem gewissen Leerhub als Mitnehmer beim Abheben des Schreibstiftes von der Diagrammscheibe 2 zu dienen.

Der Meßwertabhängige Antrieb des Trägers 19 der somit auf der Führungsstange 10 verschoben als auch um die Führungsstange 10 im geringen Maße verschwenkt wird, geht aus von einem Schrittmotor 26 welcher mittels Schrauben 27 und 28 auf geigneten Stützen an der Montageplatte 3 befestigt ist. Das auf der gegen die Montageplatte 3 weisenden Motorwelle befestigte Ritzel 29 kämmt mit einem Zahnrad 30, welches mit einem Zahnrad 31 ein Teil bildet. Letzteres steht in Eingriff mit einer an dem Träger 19 ausgebildeten Verzahnung 32. Eine in der Montageplatte 3 vorgesehene Aussparung 33 ermöglicht nicht nur ein Durchgreifen des Schreibstiftes 23 auf die Diagrammscheibe 2, sondern auch ein Eintauchen des Trägers 19 in die Plattenebene der Montageplatte 3, wodurch eine weitgehende Bauraumverdichtung gegeben ist.

Die in der Fig. 1 dargestellte Diagrammscheibe 2 ist in der üblichen Weise mit einem für eine Aufzeichnungsdauer von 24 Stunden ausgelegten Skalen- und Diagrammnetzwerk versehen, von dem der Einfachheit halber nur die Zeitskalen 34 und 35 sowie die Geschwindigkeitsskalenkreise, von denen einer mit 36 bezeichnet ist, dargestellt sind. Mit 37 und 38 sind zwei Geschwindigkeitsdiagramme bezeichnet. Die beiden Diagramme verbindende Linie 39 stellt ein Element der bei Stillstand des Fahrzeuges sich ergebende Grundlinie der Geschwindigkeitsaufzeichnungen dar.

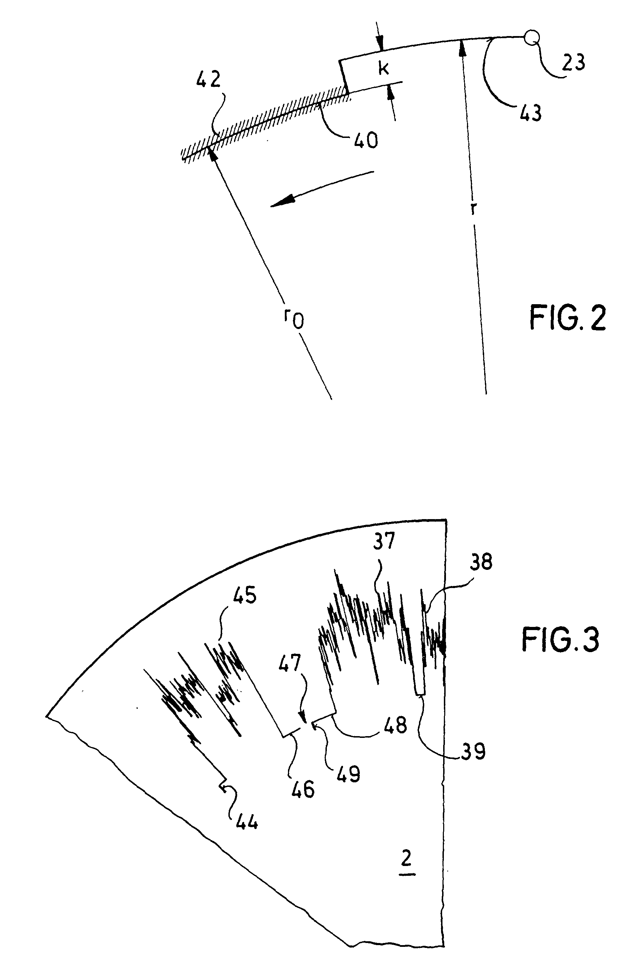

Die Nullinie 40 (Fig. 2) des Schreibsystems 1 wird aufgezeichnet, wenn der Träger 19 gegen einen festen Anschlag gesteuert wird. Im Falle des in Fig. 1 dargestellten Ausführungsbeispiels wird der fester Anschlag von dem Halter 6 gebildet. Mit diesem wirkt ein Lagerschenkel 41 des Trägers 19 zusammen. In der Fig. 2 ist die Nullinie 40 mit einem Toleranzfeld 42 versehen, welches die mögliche durch Fertigungs- und Montagetoleranzen der einzelnen Bauteile bedingte Lage des Schreibstiftes 23 symbolisieren soll, wenn der Träger 19 an dem Anschlag 6 anliegt. Mit k ist ein gerätespezifischer Korrekturwert, der einer genau definierten Impulszahl zur Ansteuerung des Schrittmotors 26 entspricht, bezeichnet. 43 stellt die Grundlinie der Geschwindigkeitsaufzeichnungen dar. Der Radius der Grundlinie 43 bezogen auf den Mittelpunkt des Zentrier- und Mitnahmedorns 4 ist mit r bezeichnet; der Radius der Nullinie 40 mit r₀.

Der Diagrammscheibenausschnitt, den die Fig. 3 zeigt, stellt, was die Aufzeichnungen anbelangt, eine Fortsetzung der in Fig. 1 dargestellten Aufzeichnungen dar. Dabei ist ersichtlich, daß nach dem Eingeben der Diagrammscheibe 2 in den betreffenden Fahrtschreiber zunächst eine Markierung 44 aufgezeichnet worden ist. Das heißt, der Schreibstift 23 war beim Eingeben der Diagrammscheibe 2 von der Aufzeichnungsebene angehoben, wurde dann abgesenkt und gegebenenfalls mehrfach zwischen den Positionen Grundlinie und Nullinie hin und her bewegt. Nach einer nicht näher bezeichneten Wartezeit erfolgte eine Fahrt, während der das Geschwindigkeitsdiagramm 48 aufgezeichnet worden ist. In der nach dieser Fahrt folgenden Stillstandszeit des Fahrzeuges folgt nach einem Grundlinienabschnitt 46 eine Lücke 47 und ein weiterer Grundlinienabschnitt 48, der mit einer Markierung 49 beginnt. Das heißt, daß während der Stillstandszeit zwischen den durch die Diagramme 37 und 48 gekennzeichneten Fahrten der Fahrtschreiber zumindest geöffnet und wieder geschlossen worden ist. Gegebenenfalls ist beispielsweise anläßlich einer Verkehrskontrolle die Diagrammscheibe 2 auch entnommen und wieder in den Fahrtschreiber eingelegt worden.

Das im Zusammenhang mit dem Aufzeichnen der Markierung 44 erfolgende Zurücksteuern des Trägers 19 an den Anschlag 6 kann jeweils dazu genutzt werden, das Schreibsystem 1 zu normieren, das heißt Abweichungen zwischen der Istposition des Schreibsystems von dem durch das Meßsystem vorgegebenen Sollwert auszugleichen, indem der Schrittmotor 26 mit einer zusätzlichen meßwertunabhängigen Impulsserie beaufschlagt wird. Derartige Abweichungen können durch vorübergehende Schwergängigkeit des Schreibsystems durch einen Verlust oder ein nicht in vollem Umfange Wirksamwerden von dem Schrittmotor 26 zugeführten Steuerimpulsen oder durch ein in betrügerischer Absicht erfolgtes Festhalten des Trägers 19 entstehen.

Abschließend sei noch erwähnt, daß der Korrekturfaktor k aus der Differenz der Radien r und r₀ gebildet wird. Der Radius r der Grundlinie 43, die aus Interpretationsgründen vorzugsweise nicht auf den Diagrammscheiben 2 aufgedruckt ist, ist eine festgelegte Größe. Der Radius der Nullinie r₀, mit anderen Worten der Abstand zwischen der Spitze des Schreibstiftes 23 und der geometrischen Achse des Zentrier- und Mitnahmedorns 4, ergibt sich bei Anlage des Trägers 19 an dem Anschlag 6 aus der Toleranzsituation des funktionsfertig montierten Schreibsystems 1. Dieser Abstand wird in einem Montagezustand des Fahrtschreibers, in welchem das Schreibsystem 1 zwar funktionsfertig montiert, aber noch von außen zugänglich ist, vorzugsweise optisch ausgemessen, wobei zur Bestimmung der geometrischen Achse des Zentrier- und Mitnahmedorns 4 mittelbar auch der Außendurchmesser einer eingelegten Diagrammscheibe 2 abgetastet werden kann. Wesentlich genauer ist es jedoch die Konturen des Dorns bzw. bei nicht eingelegter Diagrammscheibe den äußeren Rand der mit dem Zentrier- und Mitnahmedorn 4 einteilig ausgebildeten Diagrammscheibenauflage abzutasten, was durch die vorgesehene Aussparung 18 ohne weiteres möglich ist. Auch die Spitze des Schreibstiftes 23 ist, wenn sie nicht unmittelbar zugänglich ist, auch mittelbar erfaßbar, indem die Rückseite des Schreibstiftes 23 ausgemessen oder die von dem Schreibstift aufgezeichnete Nullinie abgetastet wird. Nachfolgend werden der ermittelte Radius r₀ und Radius r in einem dem Meßsystem des Fahrtschreibers zugeordneten Parameterspeicher, beispielsweise einem EEPROM, abgelegt. Die Berechnung des Korrekturfaktors k erfolgt in diesem Falle bei Bedarf durch den Mikroprozessor des Meßsystems.

Der Vollständigkeit halber sei noch erwähnt, daß in gleicher Weise auch das Schreibsystem für das Aufzeichnen der Motordrehzahlen justiert werden kann, wenn der betreffende Fahrtschreiber mit einem solchen Schreibsystem zusätzlich ausgerüstet ist.

## Patentansprüche

1. Fahrtschreiber mit einem im Schreibsystem für die Geschwindigkeitsaufzeichnungen vorgesehenen Schrittmotor (26), mit einem Anschlag (6), mit welchem der Träger (19) des Geschwindigkeitsschreibstiftes (23) in nicht zwingend gleichen Zeitabständen durch Beaufschlagen des Schrittmotors mittels einer meßwertunabhängigen Impulsserie in Wirkverbindung bringbar ist, um bleibende Abweichungen der tatsächlichen Position des Geschwindigkeitsschreibstifftes von der Sollposition des Schrittmotors zu vermeiden und mit Vorkehrungen zur Verbesserung der Lagegenauigkeit des Geschwindigkeitsschreibstiftes in bezug auf eine für die Geschwindigkeitsaufzeichnungen auf einer in dem Fahrtschreiber als Aufzeichnungsträger verwendeten Diagrammscheibe (2) festgelegte Grundlinie (42), wobei
der Anschlag (6) derart angeordnet ist, daß die Grundlinie der Geschwindigkeitsaufzeichnungen (43) sich bei Anlage des Trägers (19) an dem Anschlag (6) außerhalb eines durch Fertigungs- und Montagetoleranzen sich ergebenden Toleranzfeldes (42) der Nullinie (40) befindet,
der Radius (r) der Grundlinie (43) und der gerätespezifische Radius (r₀) der Nullinie (40) in einem dem Meßsystem des Fahrtschreibers zugeordneten Festwertspeicher eingeschrieben sind und daß jeweils dann, wenn der Träger (19) des Geschwindigkeitsschreibstiftes (23) gegen den Anschlag (6) zurückgesteuert wird und das Ausrichten des Geschwindigkeitsschreibstiftes (23) und des Schrittmotors (26) durch Anlage des Trägers (19) an dem Anschlag (6) abgeschlossen ist, die tatsächliche Grundposition des Geschwindigkeitsschreibstiftes (23) dadurch erzielbar ist, daß der Schrittmotor (26) mit einer aus den abgespeicherten Radien (r) und (r₀) als Korrekturwert (k) ermittelten Impulszahl beaufschlagbar ist.

2. Fahrtschreiber nach Anspruch 1, wobei
die Ermittlung des Korrekturwertes (k) in einem Montagezustand des Fahrtschreibers erfolgt, in welchem einerseits eine funktionsfertige Zuordnung des Geschwindigkeitsschreibstiftes (23) zu dem den Diagrammscheiben (2) zugeordneten Zentrier- und Mitnahmedorn (4) andererseits eine Zugänglichkeit für optische Abtastmittel gegeben sind, derart, daß der Träger (19) des Geschwindigkeittsschreibstiftes (23) an dem Anschlag (6) in Anlage bringbar ist, der Abstand zwischen der Schreibstiftspitze und der Mitte des Zentrier- und Mitnahmedorns (4) messbar ist und die Differenz zwischen dem für die Grundlinie (43) festgelegten Radius (r) und dem gemessenen Abstand (r ) bildbar ist.

3. Fahrtschreiber nach Anspruch 1, wobei
bei jedem Öffnen und Schließen des Fahrtschreibers und bei jedem Eingeben einer Diagrammscheibe (2) eine von der Grundlinie der Geschwindigkeitsaufzeichnungen (43) und von der durch den Anschlag (6) bestimmten Nullinie (40) des Schreibsystems (1) begrenzte radiale Markierung (44) aufzeichenbar ist.

## Claims

1. Tachograph having a stepping motor (26). which is provided in the writing system for the speed recordings, having a stop (6) to which the carrier (19) of the speed writing pen (23) can be operatively connected at not necessarily identical time intervals by applying a measured-value-independent series of pulses to the stepping motor in order to avoid persistent deviations of the actual position of the speed writing pen from the set point position of the stepping motor, and having measures for improving the positional accuracy of the speed writing pen with respect to a baseline (42) which is defined for the speed recordings on a diagram disc (2) used as a recording medium in the tachograph, the stop (6) being arranged in such a way that the baseline of the speed recordings (43) is outside a tolerance field (42) of the zero line (40) which arises as a result of fabrication and mounting tolerances when the carrier (19) bears against the stop (6), the radius (r) of the baseline (43) and the device-specific radius (r₀) of the zero line (40) being written in a read-only memory assigned to the measuring system of the tachograph, and it being possible to obtain the actual base position of the speed writing pen (23) whenever the carrier (19) of the speed writing pen (23) is returned against the stop (6) and the orientation of the speed writing pen (23) and of the stepping motor (26) is terminated as a result of the carrier (19) bearing against the stop (6), by virtue of the fact that a number of pulses which is determined from the stored radii (r) and (r₀) as correction value (k) can be applied to the stepping motor (26).

2. Tachograph according to Claim 1, in which the correction value (k) is determined in a mounted state of the tachograph in which, on the one hand, a functionally complete assignment of the speed writing pen (23) to the centring and driving pin (4) which is assigned to the diagram discs (2) is achieved, and, on the other hand, there is accessibility for optical sensing means, such that the carrier (19) of the speed writing pen (23) can be made to bear against the stop (6), the distance between the tip of the writing pen and the centre of the centring and driving pin (4) can be measured and the difference can be formed between the radius (r) defined for the baseline (43) and the measured distance (r₀).

3. Tachograph according to Claim 1, in which, whenever the tachograph is opened and closed and whenever a diagram disc (2) is inserted, a radial marking (44) which is bounded by the baseline of the speed recordings (43) and by the zero line (40) of the writing system (1) which is determined by the stop (6) can be recorded.

## Revendications

1. Tachygraphe comportant un moteur pas à pas (26) prévu dans le système d'inscription pour les enregistrements de vitesse, une butée (6) avec laquelle le support (9) du stylet d'inscription de vitesse (22) est mis en liaison active à des intervalles de temps non nécessairement égaux par actionnement du moteur pas à pas au moyen d'une série d'impulsions indépendante de la valeur de mesure, pour éviter des écarts résiduels entre la position réelle du stylet d'inscription de vitesse et la position prescrite du moteur pas à pas et avec des dispositions pour l'amélioration de la position du stylet d'inscription de vitesse par rapport à une ligne de base (42) fixée pour les enregistrements de vitesse sur un disque (2) utilisé dans le tachygraphe comme support d'enregistrement,
la butée (6) étant disposée de manière que la ligne de base des enregistrements de vitesse (43) se trouve, lors de l'application du support (19) sur la butée (6) hors d'un champ de tolérance (42) de la ligne de zéro (40)résultant des tolérances de fabrication et de montage,
le rayon (r) de la ligne de base (43) et le rayon (r₀) de la ligne de zéro (40) spécifique de l'appareil inscrit dans une mémoire morte associée au système de mesure du tachygraphe et ensuite respectivement, lorsque le support (19) du stylet d'inscription de vitesse (23) est ramené contre la butée (6), le redressement du stylet d'inscription de vitesse (23) et du moteur pas à pas (26) est terminé par application du support (19) sur la butée (6), la position de base réelle du stylet d'inscription de vitesse (23) peut être atteint par le fait que le moteur pas à pas (26) peut être actionné par un nombre d'impulsions calculé à partir des rayons (r) et (r0) mis en mémoire comme valeur de correction (k).

2. Tachygraphe selon la revendication 1, dans lequel le calcul de la valeur de correction (k) se fait dans un état de montage du tachygraphe, dans lequel il existe, d'une part, une association fonctionnelle du stylet d'inscription de vitesse (23) avec le mandrin de centrage et d'entraînement (4) associé aux disques (2), d'autre part, une accessibilité pour des moyens optiques de palpage, de sorte que le support (19) du stylet d'inscription de vitesse (23) peut être appliqué sur la butée (6), la distance entre la point du stylet et le milieu du mandrin de centrage et d'entraînement (4) est mesurable et la différence entre le rayon (r) fixé pour la ligne de base (43) et la distance mesurée (r₀) peut être formée.

3. Tachygraphe selon la revendication 2, dans lequel, tors de chaque ouverture et fermeture du tachygraphe et tors de chaque mise en place d'un disque (2), un signe radial (44) limité par la ligne de zéro des enregistrements de vitesse (43) et par la ligne de zéro (40) déterminée par la butée (6) du système d'inscription (1) peut être enregistré.
